Europäisches Patentamt

European Patent Office

Office européen des brevets

(11) Veröffentlichungsnummer : **0 397 804 B1**

(12) **EUROPÄISCHE PATENTSCHRIFT**

(45) Veröffentlichungstag der Patentschrift :
28.08.91 Patentblatt 91/35

(21) Anmeldenummer : 89904052.1

(22) Anmeldetag : 25.03.89

(86) Internationale Anmeldenummer :
PCT/EP89/00333

(87) Internationale Veröffentlichungsnummer :
WO 89/09353 05.10.89 Gazette 89/24

(51) Int. Cl.⁵ : **F16H 47/04**

(54) **LASTSCHALTGETRIEBE MIT STUFENLOS EINSTELLBARER ÜBERSETZUNG.**

(30) Priorität : 30.03.88 DE 3810856
21.01.89 DE 3901754

(43) Veröffentlichungstag der Anmeldung :
22.11.90 Patentblatt 90/47

(45) Bekanntmachung des Hinweises auf die
Patenterteilung :
28.08.91 Patentblatt 91/35

(84) Benannte Vertragsstaaten :
DE FR GB

(56) Entgegenhaltungen :
EP-A- 3 397
DE-C- 3 342 047
US-A- 4 232 568

(73) Patentinhaber : ZAHNRADFABRIK
FRIEDRICHSHAFEN AKTIENGESELLSCHAFT
Löwentaler Strasse 100 Postfach 2520
W-7990 Friedrichshafen 1 (DE)

(72) Erfinder : TENBERGE, Peter
Nelkenweg 8
W-7990 Friedrichshafen 1 (DE)

EP 0 397 804 B1

**Beschreibung**

Die Erfindung bezieht sich auf ein Lastschaltgetriebe mit stufenlos einstellbarer Übersetzung, das aus einem von einer Hauptantriebswelle angetriebenen, leistungsverzweigenden Koppelgetriebe und einem diesem zugeordneten, vorzugsweise als hydrostatische Einheit ausgebildeten Stellgetriebe besteht, wobei das Koppelgetriebe Planetensätze und zwei abtriebsseitige Koppelwellen aufweist, deren Drehzahlen an einer Stellbereichsgrenze des Stellgetriebes gleich sind, während bei einer Verstellung des Stellgetriebes in Richtung der anderen Stellbereichsgrenze die Drehzahl der einen Koppelwelle stetig zunimmt und die der anderen Koppelwelle stetig abnimmt, wobei die Koppelwellen wechselweise an das Schaltgetriebe kuppelbar sind, wobei die Koppelwellen über Kupplungen wechselweise verbindbar sind mit einer Eingangswelle eines Überlagerungsgetriebes, in welchem der Eingangswellendrehzahl eine in konstantem oder stufenweise änderbarem Verhältnis zur Hauptantriebswellendrehzahl stehende Drehzahl überlagerbar ist und eine Koppelwelle des Überlagerungsgetriebes unmittelbar kuppelbar ist mit der Abtriebswelle des Lastschaltgetriebes.

Ein Lastschaltgetriebe der vorgenannten Gattung ist aus der US-A- 42 32 568 gemäß Fig. 5 bekannt. Zwei koaxiale Koppelwellen des als vierwelliges Umlaufgetriebes ausgebildeten Koppelgetriebes, deren Übersetzung zur Hauptantriebswelle stufenlos einstellbar ist, werden innerhalb des gesamten Fahrbereichs des Lastschaltgetriebes abwechselnd mit einem Eingangsglied (Sonnenrad) oder unmittelbar mit einer Ausgangswelle des Lastschaltgetriebes verbunden. Eine Hauptantriebswelle treibt dabei einen Steg des Überlagerungsgetriebes an, während eine abtriebsseitige Koppelwelle des Überlagerungsgetriebes mit einem Hohlrad des Überlagerungsgetriebes verbunden ist. Das Koppelgetriebe weist zwei Planetensätze auf, deren Sonnenräder jeweils vom Stellgetriebe antreibbar sind, während die Drehzahl der Hauptantriebswelle jeweils auf ein Hohlrad des ersten Planetensatzes und einen Steg des zweiten Planetensatzes wirkt. Eine erste Koppelwelle des Koppelgetriebes ist mit dem Steg des ersten Planetensatzes verbunden und eine zweite Koppelwelle schließt sich unmittelbar an das Hohlrad des zweiten Planetensatzes an. Ein derartiger Aufbau des Koppelgetriebes ist relativ kompliziert und führt zu relativ großen baulichen Abmessungen des Lastschaltgetriebes. Außerdem ergeben sich ungünstige Stelleistungseinflüsse, da der gesamte Geschwindigkeitsbereich des Lastschaltgetriebes durch vier Stellbereiche abgedeckt ist.

Der Erfindung liegt daher die Aufgabe zugrunde, eine kompakte bauliche Anordnung eines Lastschaltgetriebes zu schaffen, bei welchem eine baulich günstige Anordnung des Koppelgetriebes zu realisieren ist und mit baulich günstigen Mitteln der gesamte Geschwindigkeitsbereich des Lastschaltgetriebes in mehrere Stellbereiche des Koppelgetriebes aufgeteilt werden soll.

Diese Aufgabe wird nach Anspruch 1 dadurch gelöst, daß das Koppelgetriebe eine Doppelplanetenstufe aufweist, von welcher jeweils ein Planetenrad über ein Sonnenrad mit einer Ausgangswelle des Stellgetriebes und über ein Hohlrad mit der ersten Koppelwelle trieblich verbunden ist, während das jeweils andere Planetenrad der Doppelplanetenstufe mit einem Sonnenrad der zweiten Koppelwelle kämmt und daß der gemeinsame Steg der Doppelplanetenstufe von der Hauptantriebswelle angetrieben wird. Dadurch erhält man ein vierwelliges Koppelgetriebe mit nur einem Steg und es lassen sich bei kompakter Ausbildung des Koppelgetriebes Drehzahlen an den Koppelwellen erzielen, die im Schaltgetriebe zum lastfreien Gangwechsel ohne Zugkraftunterbrechung führen und daß die Eingangswelle über das Überlagerungsgetriebe hinaus verlängert ist, wobei über diese Verlängerung der Eingangswelle zumindest eine Planetenradstufe eines Schaltgetriebes antreibbar ist.

Alternativ wird gemäß Anspruch 2 die Aufgabe dadurch gelöst, daß bei dem eine Doppelplanetenstufe aufweisenden Koppelgetriebe jeweils ein Satz Planetenräder über ein Hohlrad mit der ersten Koppelwelle und über ein Sonnenrad mit der zweiten Koppelwelle trieblich verbunden ist, während der andere Satz Planetenräder der Doppelplunetenstufe von einem mit der Ausgangswelle des Stellgetriebes verbundenen Sonnenrad und ein Steg von der Hauptantriebswelle angetrieben werden und daß die Eingangswelle über das Überlagerungsgetriebe hinaus verlängert ist, wobei über diese Verlängerung der Eingangswelle zumindest eine Planetenradstufe eines Schaltgetriebes antreibbar ist.

Nach Anspruch 3 wird die Aufgabe dadurch gelöst, daß das Koppelgetriebe mit zwei Planetenradstufen versehen ist, wobei ein Sonnenrad der ersten Planetenradstufe sowie ein äußeres Zentralrad der zweiten Planetenradstufe mit einer Ausgangswelle des Stellgetriebes und ein Hohlrad der ersten Planetenradstufe sowie ein inneres Zentralrad der zweiten Planetenradstufe mit der ersten Koppelwelle trieblich verbunden sind, während ein Steg der ersten Planetenradstufe von der Hauptuntriebswelle angetrieben wird und ein Planetenradträger der zweiten Planetenradstufe mit der zweiten Koppelwelle in Verbindung steht und daß die Eingangswelle über das Überlagerungsgetriebe hinaus verlängert ist, wobei über diese Verlängerung der Eingangswelle zumindest eine Planetenradstufe eines Schaltgetriebes antreibbar ist. Ein derartiges Koppelgetriebe weist einen sehr kompakten Aufbau auf.

Gemäß Anspruch 4 besteht die Möglichkeit, das Überlagerungsgetriebe als reduzierte Planetenradstufe auszubilden, wobei Planetenräder der ersten Stufe jeweils mit einem Sonnenrad der Eingangswelle im Eingriff stehen und Planetenräder der zweiten Stufe mit einem Zentralrad kämmen, das mittels einer Kupplung an die Hauptantriebswelle kuppelbar ist und ein Steg der reduzierten Planetenradstufe als Koppelwelle dient.

Dem Anspruch 5 zufolge soll die reduzierte Planetenradstufe Doppelplaneten aufweisen und das Zentralrad als Sonnenrad ausgebildet sein. Im Anspruch 6 wird vorgeschlagen, diese reduzierte Planetenradstufe nach Anspruch 4 um einen Satz Planetenräder zu erweitern, der mit den Doppelplaneten und einem weiteren über eine Bremse festlegbaren äußeren Zentralrad kämmt. Bei Betätigung dieser Bremse erhält man für die Rückwärtsfahrt höhere Übersetzungen der Rückwärtsgänge.

Alternativ zu den vorgenannten Lösungen, die in der reduzierten Planetenradstufe Doppelplaneten aufweisen, kann gemäß Anspruch 7 die reduzierte Planetenradstufe insgesamt aus miteinander kämmenden Planeten gebildet werden, wobei das Zentralrad ein Hohlrad ist.

Schließlich kann die reduzierte Planetenradstufe des Überlagerungsgetriebes gemäß Anspruch 8 zur Schaltung von Gangstufen des Schaltgetriebes mitverwendet werden. Zu diesem Zweck ist ein Hohlrad der ersten Stufe gehäusefest abbremsbar und das Sonnenrad der zweiten Stufe ist wahlweise an die Hauptantriebswelle kuppelbar oder mittels einer Bremse gehäusefest abbremsbar.

Gemäß Anspruch 9 können bei Ausbildung der reduzierten Planetenradstufe als miteinander kämmende Planeten die Planetenräder der ersten Stufe der reduzierten Planetenradstufe mit einem äußeren Zentralrad im Eingriff sein, das mittels einer Bremse abbremsbar ist, wodurch die reduzierte Planetenradstufe zur Schaffung zweier weiterer Gangstufen des Lastschaltgetriebes verwendet werden kann, und zwar bei entsprechender Betätigung der Doppelkupplung des Koppelgetriebes.

In weiterer Ausgestaltung der Erfindung kann gemäß Anspruch 10 das Lastschaltgetriebe im Schaltgetriebe eine dritte Planetenradstufe aufweisen, zu der ein Sonnenrad gehört, das mit der über das Überlagerungsgetriebe verlängerten Eingangswelle verbunden ist, dessen mit der Hauptabtriebswelle verbundener Steg wahlweise über eine Kupplung mit der Koppelwelle des Überlagerungsgetriebes verbindbar ist oder dessen Hohlrad über eine Bremse gehäusefest abbremsbar ist.

In Erweiterung des Schaltgetriebes kann gemäß Anspruch 11 eine vierte Planetenradstufe vorgesehen mein, deren Sonnenrad mit dem Hohlrad der dritten Planetenradstufe verbunden ist, deren Steg mit der Hauptabtriebswelle verbunden ist und deren Hohlrad über eine Bremse gehäusefest abbremsbar ist. Diese vierte Planetenradstufe dient zur Schaltung von Rückwärtsgangstufen des Lastschaltgetriebes.

Darüber hinaus besteht gemäß Anspruch 12 die Möglichkeit, eine weitere Schaltstufe zu realisieren, indem zwischen der verlängerten Eingangswelle und der Hauptabtriebswelle eine Kupplung angeordnet ist. Über diese Kupplung ist ein direkter Durchtrieb von der Eingangswelle auf die Hauptabtriebswelle schaltbar.

Ein als einfache Planetenradstufe ausgebildetes Überlagerungsgetriebe kann gemäß Anspruch 13 durch wahlweise Betätigung einer zwischen dem Steg und der Hauptantriebswelle angeordneten Kupplung oder einer auf den Steg wirkenden Bremse als Umlaufräderstufe des Schaltgetriebes mitverwendet werden. Daraus ergibt sich eine erhebliche Reduzierung des Bauaufwandes für das Schaltgetriebe.

Dem Anspruch 14 zufolge kann das Schaltgetriebe zwei gekoppelte Planetenradstufen aufweisen, wobei eine Stegwelle der ersten Planetenradstufe wahlweise an die Koppelwelle des Überlagerungsgetriebes oder an die Eingangswelle kuppelbar ist und ein Sonnenrad der zweiten Planetenradstufe aufnimmt, während eine Stegwelle der zweiten Planetenradstufe an ein äußeres Zentralrad der ersten Planetenradstufe kuppelbar und unmittelbar mit der Hauptabtriebswelle verbunden ist und wobei Planetenräder der ersten Planetenradstufe mit einem auf der Eingangswelle befestigten Sonnenrad kämmen und ein Hohlrad der zweiten Planetenradstufe abbremsbar ist. Ein derart ausgeführtes Schaltgetriebe bietet durch Schaltkombinationen seiner vier Schaltelemenfe eine äußerst variable Schaltlogik für das erfindungsgemäße Lastschaltgetriebe.

Schließlich soll gemäß Anspruch 15 dem Schaltgetriebe ein Gruppengetriebe nachgeschaltet sein, das nochmals die Schalfungsmöglichkeiten des Lastschaltgetriebes erweitert.

Zur weiteren Erläuterung der Erfindung wird auf die Zeichnung verwiesen, in der neun Ausführungsbeispiele vereinfacht dargestellt sind. Es zeigen :

Fig. 1  eine schematische Darstellung eines Lastschaltgetriebes mit einem Koppelgetriebe, dem ein hydrostatisches Stellgetriebe zugeordnet ist, wobei dem Koppelgetriebe eine aus Überlagerungsgetriebe und Schaltgetriebe bestehende Einheit nachgeschaltet ist,

Fig. 2  eine Schaltlogik für das Getriebe nach Fig. 1,

Fig. 3  einen normierten Geschwindigkeitsplan für ein Fahrzeug mit dem Lastschaltgetriebe nach Fig. 1,

Fig. 4  ein Lastschaltgetriebe mit geänderter Anordnung des Stellgetriebes sowie geänderter Ausbildung von Koppel- und Schaltgetriebe,

Fig. 5  eine Schaltlogik für das Lastschaltgetriebe nach Fig. 4,

Fig. 6  ein Lastschaltgetriebe, bei dem ein als einfache Planetenradstufe ausgebildetes Überlagerungsge-

3

triebe wahlweise als Umlaufräderstufe des Schaltgetriebes schaltbar ist,

Fig. 7     eine Schaltlogik für das Lastschaltgetriebe nach Fig. 6,

Fig. 8     eine weitere Ausgestaltung eines Lastschaltgetriebes, bei dem durch die Verwendung zusätzlicher Schaltkupplungen im Schaltgetriebe eine erweiterte Anzahl von Gängen schaltbar ist,

Fig. 9     eine Schaltlogik für das Getriebe nach Fig. 8,

Fig. 10     eine Ausbildung eines Lastschaltgetriebes, dessen Überlagerungsgetriebe eine reduzierte Planetenstufe aufweist, die ebenfalls als Umlaufräderstufe eines Schaltgetriebes schaltbar ist und

Fig. 11     eine gegenüber Fig. 10 geänderte Ausbildung der reduzierten Planetenstufe,

Fig. 12     eine Schaltlogik für die Lastschaltgetriebe nach den Fig. 10 und 11,

Fig. 13     ein Lastschaltgetriebe nach Fig. 6, dem ein Gruppengetriebe nachgeschaltet ist,

Fig. 14     eine Schaltlogik für das Lastschaltgetriebe nach Fig. 13,

Fig. 15     eine Variante des erfindungsgemäßen Lastschaltgetriebes, bei der das Koppelgetriebe zwei Planetenradstufen aufweist und ein im wesentlichen mit dem Ausgestaltungsbeispiel nach Fig. 10 übereinstimmendes Schaltgetriebe. einen weiteren mit Doppelplaneten kämmenden Satz Planetenräder aufweist und

Fig. 16     eine Schaltlogik für das Getriebe nach Fig. 15.

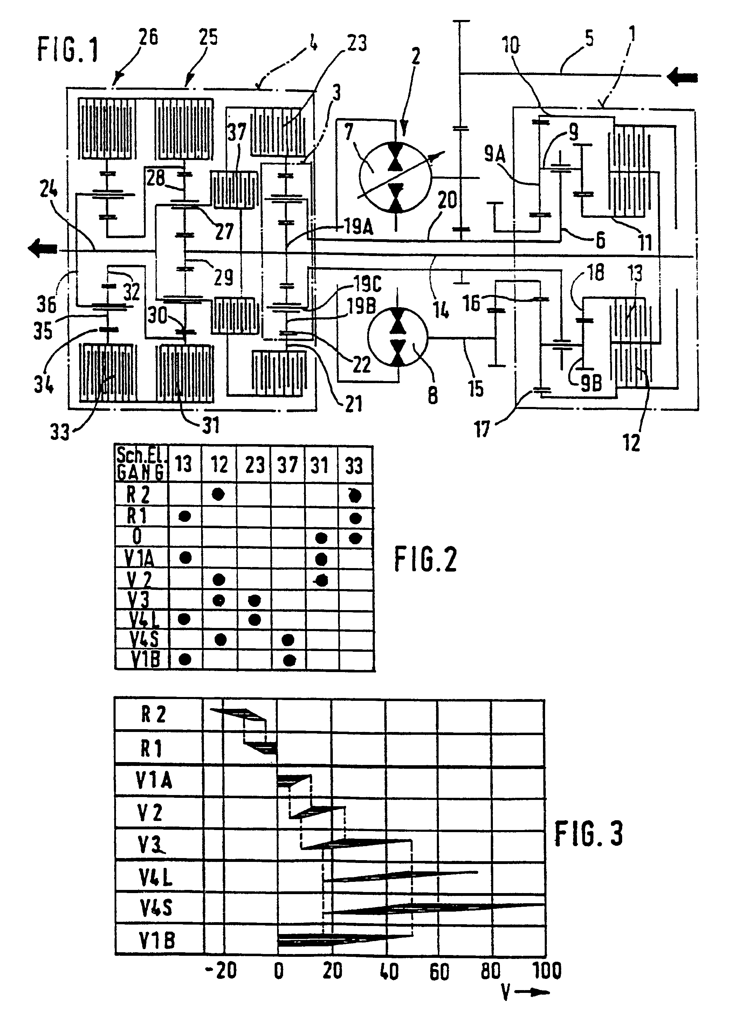

In den Fig. 1, 4, 6, 8, 10, 11 und 13 ist jeweils ein Lastschaltgetriebe mit stufenlos einstellbarer Übersetzung dargestellt., das aus einem Koppelgetriebe 1, einem als hydrostatische Einheit ausgebildeten Stellgetriebe 2, einem Überlagerungsgetriebe 3 und einem Schaltgetriebe 4 besteht. Dabei werden sowohl das Koppelgetriebe 1 als auch das Stellgetriebe 2 von einer Hauptantriebswelle 5 angetrieben, die mit dem Abtrieb einer nicht näher dargestellten Brennkraftmaschine verbunden ist. Die Hauptantriebswelle 5 treibt übe.r unterschiedliche Zahnräderpaarungen leistungsverzweigt einen Steg 6 des Koppelgetriebes 1 und eine als Verstellpumpe 7 ausgebildete hydrostatische Primäreinheit des Stellgetriebes 2 an. Die Verstellpumpe 7 bildet einen hydraulischen Kreis mit einem im Schluckvolumen konstanten Hydromotor 8, so daß die Übersetzung des Stellgetriebes 2 in den Stellbereichgrenzen der Verstellpumpe 7 stufenlos von $-1$ bis $+1$ einstellbar ist. Das Koppelgetriebe 1 weist eine Doppelplanetenstufe 9 auf, an der abtriebsseitig Koppelwellen 10 und 11 angeordnet sind, die über Kupplungen 12 und 13 an eine Eingangswelle 14 des Überlagerungsgetriebes 3 kuppelbar sind. Die Doppplanetenstufe 9 weist einen ersten Satz Planetenräder 9A und einen zweiten Satz Planetenräder 9B auf.

Bei dem Ausgestaltungsbeispiel nach Fig. 1 ist das Planetenrad 9A von einer Ausgangswelle 15 des Stellgetriebes über 2 ein Sonnenrad 16 angetrieben. Ein Hohlrad 17 ist unmittelbar verbunden mit der ersten Koppelwelle 10. An der zweiten Koppelwelle 11 greift ein inneres Zentralrad 18 an, das mit dem zweiten Planetenradsatz 9B der Doppelplanetenstufe 9 kämmt. Über die Kupplungen 12 und 13 sind die Koppelwellen 10 und 11 wahlweise an die Eingangswelle. 14 des Überlagerungsgetriebes 3 kuppelbar. Die Eingangswelle 14 nimmt im Überlagerungsgetriebe ein Sonnenrad 19A auf und ist außerdem über das Überlagerungsgetriebe 3 hinaus bis ins Schaltgetriebe 4 reichend verlängert. Planetenräder 19B der Planetenstufe des Überlagerungsgetriebes 3 sind an ihrem Steg 19C angetrieben von einer trieblich mit der Hauptantriebswelle 5 verbundenen Zwischenwelle 20. An einer Koppelwelle 21 des Überlagerungsgetriebes 3 findet über ein äußeres Zentralrad 22 eine Überlagerung der Leistungszweige aus der Eingangswelle 14 und der Zwischenwelle 20 statt. Dabei ist die Koppelwelle 21 über eine Kupplung 23 unmittelbar an eine Hauptabtriebswelle 24 des Lastschaltgetriebes kuppelbar. Weitere Gangstufen sind unter Umgehung des Überlagerungsgetriebes 3 unmittelbar über zwei weitere Planetenradstufen 25 und 26 des Schaltgetriebes 4 schaltbar. Von der ersten Planetenradstufe 25 ist ein Steg 27, der außerdem eine Verbindung zwischen der Koppelwelle 21 und der Hauptabtriebswelle 24 herstellt, mit Planetenrädern 28 versehen, die mit einem drehfest auf der Eingangswelle angeordneten Sonnenrad 29 und einem Hohlrad 30 kämmen. Das Hohlrad 30 kann mittels einer Bremse 31 gehäusefest abgebremst werden und steht außerdem mit einem Sonnenrad 32 der vierten Planetenradstufe 26 in Verbindung. Diese Planetenradstufe 26 dient als Reversierstufe zum Schalten zweier Rückwärtsgänge des Lastschaltgetriebes. Sie weist zu diesem Zweck eine Bremse 33 auf, über welche ein Hohlrad 34 gehäusefest abbremsbar ist, wobei dann ein betrieb über einen Planetenräder 35 aufnehmenden Planetenträger 36 zur Hauptabtriebswelle 24 hin erfolgt. Weiterhin ist bei dem Ausgestaltungsbeispiel nach der Fig. 1 die Verlängerung der Eingangswelle 14 mittels einer Kupplung 37 mit der Hauptabtriebswelle 24 verbindbar.

Der Fig. 2 ist die Schaltlogik für das Getriebe nach Fig. 1 zu entnehmen. Durch wechselweise Betätigung der beiden Kupplungen 13 und 12 des Koppelgetriebes und eine Betätigung der Kupplung 23 des Überlagerungsgetriebes 3, der Kupplung 37 sowie der Bremse 31 oder der Bremse 33 des Schaltgetriebes 4 lassen sich unterschiedliche Geschwindigkeitsbereiche des Lastschaltgetriebes schalten. Dabei ergibt sich ein stufenloser Übergang von einem Geschwindigkeitsbereich zum nächsten infolge der Drehzahlverhältnisse an den Koppelwellen 10 und 11. An einer Stellbereichsgrenze des Stellgetriebes 2 weisen beide Koppelwellen die gleiche Drehzahl auf, während an der entgegengesetzten Stellbereichsgrenze die eine Koppelwelle 10 stetig schneller und die andere Koppelwelle 11 stetig langsamer wird. Das Lastschaltgetriebe nach Fig. 1 liefert zwei Anfahrgänge V1A und V1B, wobei der befahrgang V1A, wie insbesondere aus dem normierten Geschwindigkeitsplan nach Fig. 3 hervorgeht, zum Anfahren bei großem Zugkraftbedarf nur einen geringen Geschwindigkeitsbereich aufweist. Dagegen ist im Anfahrgang V1B, in dem die Hauptabtriebswelle 24 direkt von der Koppelwelle 11 angetrieben wird, etwa 50% des Gesamtgeschwindigkeitsbereiches des Lastschaltgetriebes überdeckt. Dieser Anfahrgang V1B eignet sich für das Anfahren bei geringerem Zugkraftbedarf, und es kann aus diesem Anfahrgang V1B in den schnellsten Geschwindigkeitsbereich V4S umgeschaltet werden. Die Gangstufe V4L, in der eine zweite Leistungsverzweigung am Überlagerungsgetriebe 3 geschaltet wird, deckt den Hauptfahrbereich ab, wobei der Leistungsanteil, der über das stufenlose Stellgetriebe 2 fließt, besonders klein ist. Daraus resultiert ein besonders guter Getriebewirkungsgrad in dieser Gangstufe. Aufgrund der variablen Schaltlogik bietet das erfindungsgemäße Lastschaltgetriebe die Möglichkeit einer sehr komfortablen Fahrweise, wobei sich im einzelnen folgende Schaltabläufe für die Vorwärtsfahrt des Fahrzeuges realisieren lassen:

V1A-V2-V3-V4S
V1A-V2-V3-V4L
V1B-V4S
V1B-V4L

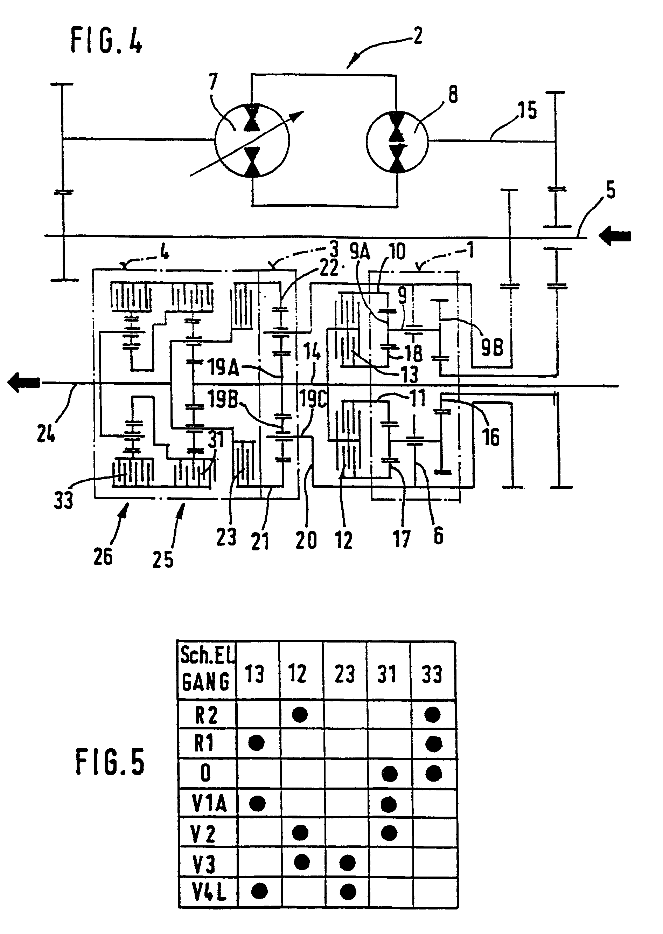

Das Ausgestaltungsbeispiel der Erfindung nach Fig. 4 unterscheidet sich vom Aufbau des Lastschaltgetriebes nach Fig. 1 zunächst dadurch, daß im Koppelgetriebe 1 das Planetenrad 9B der Doppelplanetenstufe 9 vom Sonnenrad 16 der Ausgangswelle 15 des Stellgetriebes 2 angetrieben ist, während am anderen Planetenrad 9A die Koppelwelle 10 über das Hohlrad 17 und die Koppelwelle 11 über das Sonnenrad 16 angreift. Diese Möglichkeit der Ausgestaltung des Koppelgetriebes 1 ergibt sich dadurch, daß qer Steg 6 von außen angetrieben wird. Da dieses Lastschaltgetriebe nicht mit einer Kupplung zwischen der Verlängerung der Eingangswelle 14 und der Hauptabtriebswelle 24 versehen ist, wie es in der Fig. 1 mit der Kupplung 37 der Fall ist, kann bei diesem Lastschaltgetriebe kein Anfahrgang mit großem Geschwindigkeitsbereich geschaltet werden. Wie aber aus der Schaltlogik nach Fig. 5 hervorgeht, ist in den Gangstufen V3 und V4L die Kupplung 23 des Überlagerungsgetriebes 3 derart geschaltet, daß sich eine Abtriebsleistung an der Hauptabtriebswelle 24 aus einer Überlagerung der Leistungen aus der Hauptantriebswelle 5 und der Eingangswelle 14 ergibt. Damit ist auch bei dieser Schaltung der über das stufenlose Stellgetriebe 2 fließende Leistungsanteil sehr gering. Die beiden Gangstufen V3 und V4L überdecken in diesem Fall ebenfalls den Hauptgeschwindigkeitsbereich des Fahrzeuges.

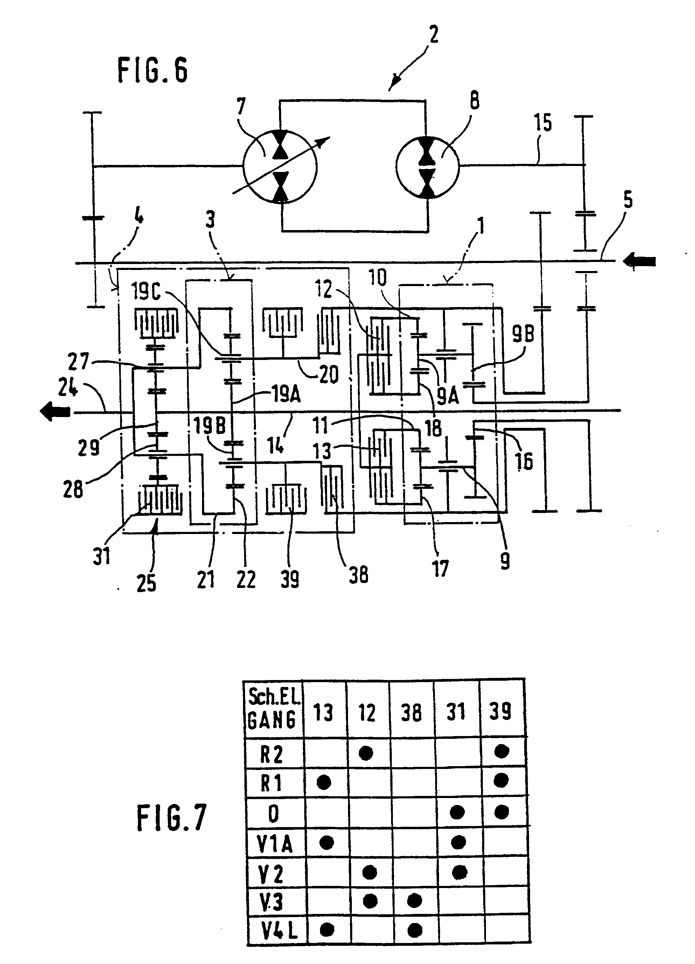

Bei dem Lastschaltgetriebe nach der Fig. 6, dessen Schaltlogik in der Fig. 7 dargestellt ist, hat das Koppelgetriebe die gleiche Ausbildung wie nach Fig. 4. Die von der Hauptantriebswelle 5 angetriebene Zwischenwelle 20 ist dabei mittels einer Kupplung 38 an den Steg 19C des überlagerungsgetriebes 3 kuppelbar oder der Steg ist mittels einer Bremse 39 abbremsbar. Auf diese Weise werden Getriebeelemente des Überlagerungsgetriebes 3 für das Schaltgetriebe 4 mitverwendet, denn der Rädersatz des Überlagerungsgetriebes dient bei Betätigung der Bremse 39 als Reversiereinrichtung, wobei sich bei Betätigung der Kupplungen 12 und 13 des Koppelgetriebes 1 die Rückwärtsgangstufen R1 und R2 schalten lassen. Die weitere Planetenstufe 25 des Schaltgetriebes 4, die dem Überlagerungsgetriebe 3 nachgeordnet ist, stimmt sowohl von ihrem Aufbau als auch in der Funktionsweise überein mit der Planetenradstufe 25 der Fig. 1 und 4.

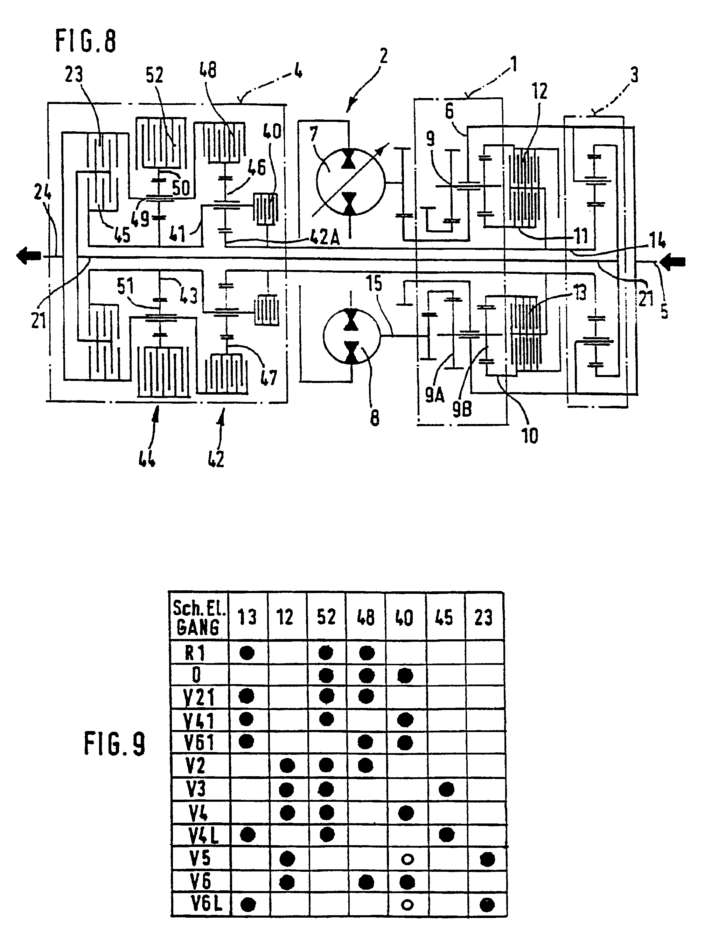

Beim Lastschaltgetriebe der Fig. 8, dessen Schaltlogik in der Fig. 9 angegeben ist, sind das Überlagerungsgetriebe 3 und das Schaltgetriebe 4 räumlich voneinander getrennt angeordnet. Die als Hohlwelle ausgebildete Eingangswelle 14 des Überlagerungsgetriebes 3 ist dabei beidseitig aus dem Koppelgetriebe 1 herausgeführt und nimmt in ihrem Inneren die Koppelwelle 21 des Überlagerungsgetriebes 3 auf. Dabei ist die Koppelwelle wiederum über die Kupplung 23 unmittelbar mit der Hauptabtriebswelle 24 verbindbar. Weiterhin ist die Eingangswelle 14 über eine Kupplung 40 mit einer Stegwelle 41 einer ersten Planetenstufe 42 verbindbar, wobei die Stegwelle 41 außerdem ein Sonnenrad 43 einer zweiten Planetenstufe 44 aufnimmt und schließlich über eine Kupplung 45 an die Koppelwelle 21 kuppelbar ist. Planetenräder 46 der ersten Planetenstufe 42 befinden sich im Eingriff mit einem Sonnenrad 42A und einem äußeren Zentralrad 47, das über eine Kupplung 48 mit einer Stegwelle 49 der zweiten Planetenstufe 44 verbindbar ist, wobei diese Stegwelle 49 unmittelbar mit der Hauptabtriebswelle 24 verbunden ist. Ein Hohlrad 50, das mit Planetenrädern 51 der zweiten Planetenstufe 44 in Eingriff ist, kann mittels einer Bremse 52 gehäusefest abgebremst werden.

Das Schaltgetriebe 4 in Fig. 8 liefert drei Gangstufen für die Vorwärtsfahrt :

An die größte Übersetzung beim betrieb am Sonnenrad 42A der ersten Planetenstufe 4 und Betätigung der Kupplung 48 sowie der Bremse 52, die mittlere Gangstufe bei Antrieb über die Kupplungen 40 oder 45, das Sonnenrad 43 der zweiten Planetenstufe 44 bei geschlossener Bremse 52 und den direkten Durchtrieb bei direkter Überbrückung des Schaltgetriebes 4, indem die Kupplung 23 eingerückt und folglich die Koppelwelle 21 mit der Hauptabtriebswelle 24 verbunden wird. Die direkte Überbrückung des Schaltgetriebes 4 erreicht man auch durch Einrücken der Kupplungen 40 und 48, so daß die Eingangswelle 14 direkt mit der Hauptabtriebswelle 24 verbunden ist.

Die Schaltlogik für das Lastschaltgetriebe nach Fig. 8 verdeutlicht, daß auch hier eine variable Schaltlogik vorliegt. Folgende Schaltabläufe lassen sich hier für die Vorwärtsfahrt realisieren :

V21-V2-V3-V4-V5-V6
V21-V2-V3-V4-V5-V6L
V21-V2-V3-V4L
V41-V4-V5-V6
V41-V4-V5-V6L
V41-V4L
V61-V6
V61-V6L

Im Sinne einfacher Schaltabläufe bleibt in den Vorwärtsgängen V5 und V6L die Kupplung 40 geschlossen, sie überträgt aber kein Drehmoment.

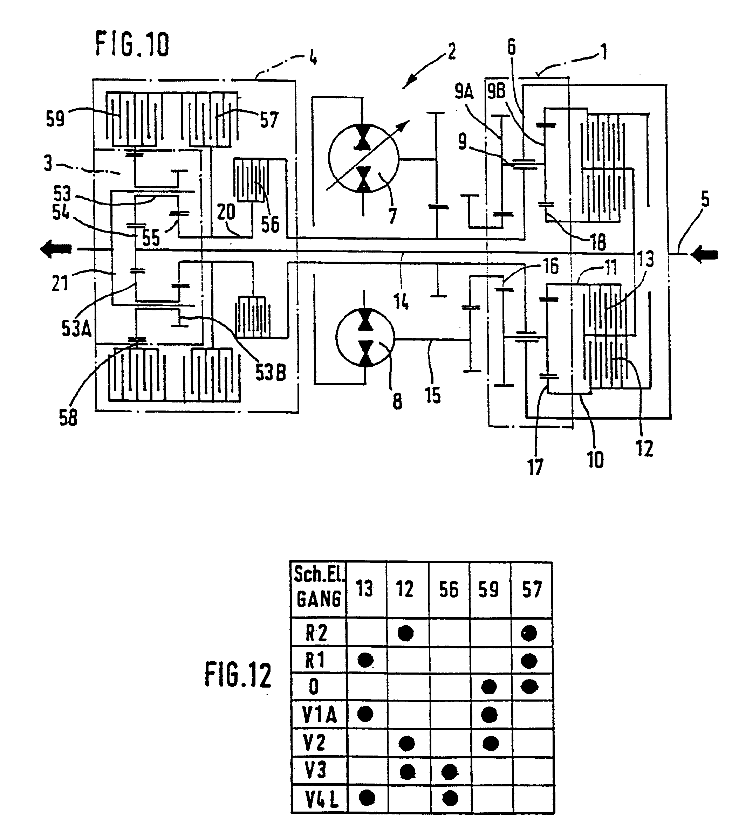

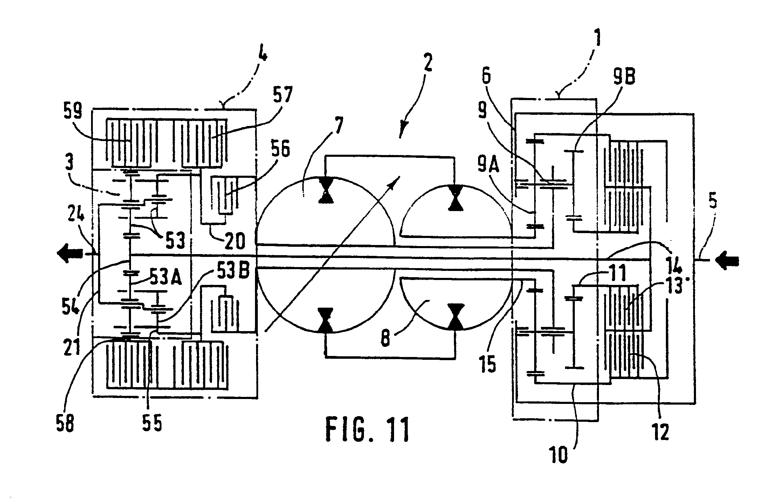

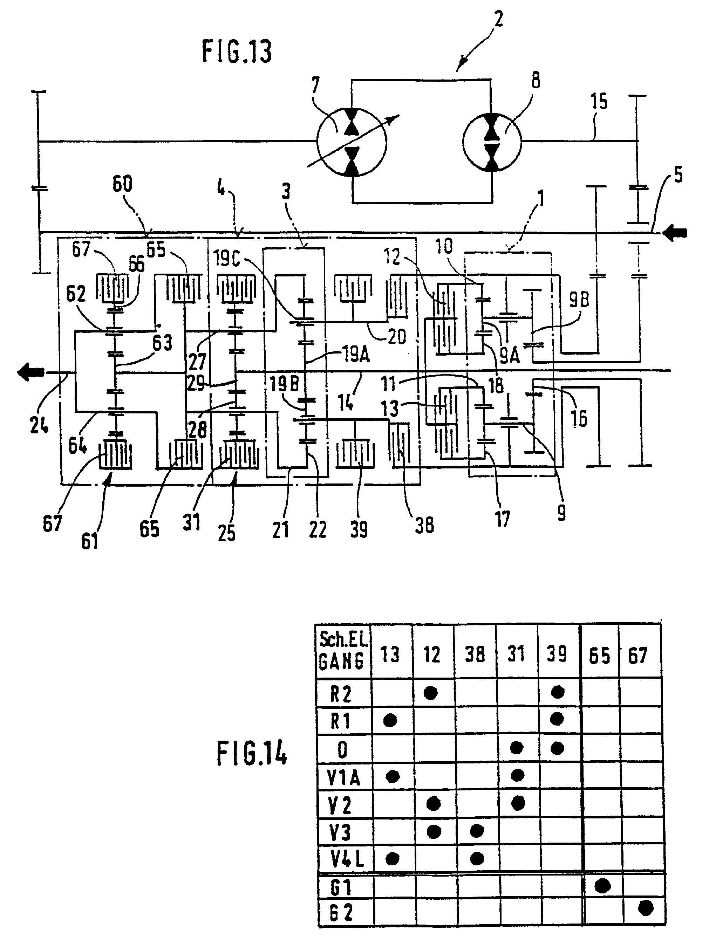

Bei dem Ausgestaltungsbeispiel den Fig. 10 und 11, dessen Schaltlogik in Fig. 12 angegeben ist, weist das Überlagerungsgetriebe 3 eine reduzierte Planetenradstufe 53 auf, wobei Planetenräder 53A der einen Stufe mit einem auf der Eingangswelle 14 befestigten Zentralrad 54 im Eingriff stehen, während Planetenräder 53B der zweiten Stufe mit einem auf der Zwischenwelle 20 angeordneten Zentralrad 55 kämmen. Die Zwischenwelle 20 kann wahlweise über eine Kupplung 56 an die Hauptantriebswelle 5 gekuppelt oder über eine Bremse 57 festgelegt werden. Als Koppelwelle 21 dient der Steg der reduzierten Planetenradstufe 53. Die Planetenräder 53A der ersten Stufe befinden sich im Eingriff mit einem äußeren Zentralrad 58, das über eine Bremse 59 festlegbar ist. Die beiden Ausgestaltungsbeispiele der Fig. 10 und 11 unterscheiden sich darin, daß in Fig. 10 die beiden Planetenräder 53A und 53B Doppelplanetenräder bilden, während sie in Fig. 11 miteinander kämmen. Daher muß das Zentralrad 55 gemäß Fig. 10 ein Sonnenrad und gemäß Fig. 11 ein Hohlrad sein.

Bei diesem Lastschaltgetriebe werden zwei Rückwärtsgangstufen bei Betätigung der Bremse 57 und abwechselndem Ankuppeln der Koppelwellen 10 und 11 an die Eingangswelle 14 geschaltet, während in den beiden unteren Vorwärtsstufen die Bremse 59 und in den oberen Gangstufen die Kupplung 56 zur Schaltung der Leistungssummierung im Überlagerungsgetriebe 3 geschaltet ist. Ein Lastschaltgetriebe mit diesem Aufbau weist den wesentlichen Vorteil auf, daß Bauelemente des Überlagerungsgetriebes 3 gleichzeitig Funktionen des Schaltgetriebes 4 übernehmen.

Das Ausgestaltungsbeispiel der Fig. 13, dessen Schaltlogik in Fig. 14 angegeben ist, hat grundsätzlich den gleichen Aufbau wie das Lastschaltgetriebe der Fig. 6 ; nur ist dem Schaltgetriebe 3 ein Gruppengetriebe 60 nachgeschaltet. Der Steg 27 ist nicht unmittelbar mit der Hauptabtriebswelle 24 verbunden, sondern führt zu einer Planetenstufe 61, wobei sie deren Planetenräder 62 über ein Sonnenrad 63 antreibt. Die Hauptabtriebswelle 24 steht mit einer Stegwelle 64 dieser Planetenstufe 61 in Verbindung und kann zur Schaltung eines direkten Durchtriebs des Gruppengetriebes über eine Kupplung 65 an den Steg 27 angekuppelt werden. Zur Drehzahluntersetzung der Hauptabtriebswelle 24 wird ein Hohlrad 66 der Planetenstufe 61 mittels einer Bremse 67 festgelegt. Aus der Schaltlogik in Fig. 14 geht hervor, daß in Erweiterung des Ausführungsbeispiels der Fig. 6 und 7 mit dem dem Schaltgetriebe 4 nachgeschalteten Gruppengetriebe 60 innerhalb der einzelnen Gangstufen ein schneller Wechsel der Übersetzung des Lastschaltgetriebes ermöglicht wird. Eine derartige Anordnung eignet sich insbesondere für Zugfahrzeuge, bei denen extreme Schwankungen im Zugkraftbedarf auftreten, beispielsweise land- oder bauwirtschaftliche Schlepper. Generell kann das Gruppengetriebe 60 sämtlichen in den übrigen Fig. 1, 4, 8, 10 und 11 dargestellten Schaltgetrieben nachgeschaltet werden.

Die Verwendung eines derartigen Gruppengetriebes 60 bietet sich auch bei einer Ausbildung des Koppelgetriebes 1 mit einer Einfachplanetenstufe an. Das Lastschaltgetriebe nutzt beim Anfahren dann nur den halben Stellbereich des Stellgetriebes 2 aus. Unter Berücksichtigung der Gruppenschaltmöglichkeit erhält man trotzdem sehr günstige Auslegungsdaten für das Stellgetriebe.

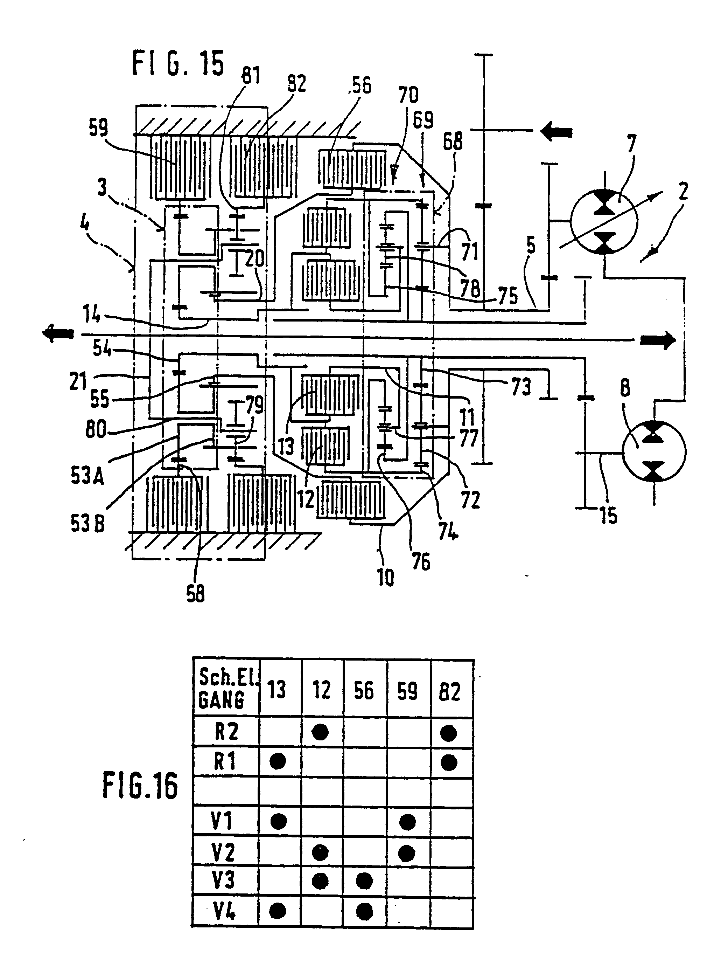

In dem Ausgestaltungsbeispiel der Fig. 15 ist ein von der Hauptantriebswelle 5 und der Ausgangswelle 15 des Stellgetriebes 2 angetriebenes Koppelgetriebe 68 mit zwei Planetenradstufen 69 und 70 versehen. Auf einem mit der Hauptantriebswelle 5 verbundenen Steg 71 sind dabei Planetenräder 72 der ersten Planetenradstufe 69 angeordnet, die mit einem von der Ausgangswelle 15 des Stellgetriebes 2 angetriebenen Sonnenrad 73 und einem Hohlrad 74 kämmen. Dieses Hohlrad 74 der ersten Planetenradstufe 69 ist verbunden mit einem inneren Zentralrad 75 der zweiten Planetenradstufe 70 und bildet die erste Koppelwelle 10, die in Übereinstimmung mit den vorgenannten Ausführungsbeispielen über die Kupplung 12 an die Eingangswelle 14 des Überlagerungsgetriebe 3 kuppelbar ist. Ein äußeres Zentralrad 76 dieser zweiten Planetenradstufe 70 wird ebenfalls von der Ausgangswelle 15 des Stellgetriebes 2 angetrieben, während ein Planetenträger 77, auf dem Planetenräder 78 dieser zweiten Planetenradstufe 70 frei drehbar angeordnet sind, als zweite Koppelwelle 11 dient, die über die Kupplung 13 mit der Eingangswelle 14 des Überlagerungsgetriebes 3 verbindbar ist.

Der Aufbau des Schaltgetriebes 4 stimmt im wesentlichen mit dem der Fig. 10 überein, wobei aber mit den Planetenrädern 53B der reduzierten Planetenradstufe 53 ein weiterer Planetenrädersatz 79 kämmt, der gemeinsam mit den zu Doppelplaneten zusammengefaßten Planetenrädern 53A und 53B auf einem Steg 80 angeordnet ist. Der Planetenrädersatz 79 befindet sich im Eingriff mit einem Hohlrad 81, welches über eine Bremse 82 festlegbar ist.

Die in Fig. 16 dargestellte Schaltlogik für das Lastschaltgetriebe nach Fig. 15 stimmt im wesentlichen mit der Schaltlogik nach Fig. 12 überein. In den Rückwärtsgangstufen R1 und R2 wird allerdings die mit dem Hohlrad 81 des zusätzlichen Planetenrädersatzes 79 verbundene Bremse 82 betätigt. Mit einer derartigen Kombination von Doppelplanetenstufe (Planetenräder 53A und 53B) und mit diesen kämmenden Planetenrädern (Planetenrädersatz 79) lassen sich hohe Übersetzungen für die Rückwärtsfahrt des Fahrzpuges erzielen. Die in der Fig. 15 dargestellte Variante des Koppelgetriebes 68 mit zwei Planetenradstufen 69 und 70 zeichnet sich durch eine besonders kompakte Bauweise aus.

<u>Bezugszeichen</u>

| | |
|---|---|
| 1 | Koppelgetriebe |
| 2 | Stellgetriebe |
| 3 | Überlagerungsgetriebe |
| 4 | Schaltgetriebe |
| 5 | Hauptantriebswelle |
| 6 | Steg von 1 |
| 7 | Verstellpumpe |
| 8 | Hydromotor |
| 9 | Doppelplanetenstufe von 1 |
| 9A | Planetenräder |
| 9B | Planetenräder |
| 10 | Koppelwelle |
| 11 | Koppelwelle |
| 12 | Kupplung von 10 |
| 13 | Kupplung von 11 |
| 14 | Eingangswelle von 3 |
| 15 | Ausgangswelle von 2 |
| 16 | Sonnenrad, angetrieben von 15 |
| 17 | Hohlrad auf 10 |
| 18 | inneres Zentralrad auf 11 |
| 19A | Sonnenrad von 3 |
| 19B | Planetenräder von 3 |
| 19C | Steg von 3 |
| 20 | Zwischenwelle |
| 21 | Koppelwelle von 3 |
| 22 | äußeres Zentralrad von 3 |
| 23 | Kupplung an 22 |
| 24 | Hauptabtriebswelle |
| 25 | Planetenradstufe |
| 26 | Planetenradstufe |
| 27 | Steg von 25 |
| 28 | Planetenrad von 25 |
| 29 | Sonnenrad von 25 |
| 30 | Hohlrad von 25 |
| 31 | Bremse von 25 |
| 32 | Sonnenrad von 26 |
| 33 | Bremse von 26 |
| 34 | Hohlrad von 26 |
| 35 | Planetenräder von 26 |
| 36 | Planetenträger von 26 |

| 37 | Kupplung zwischen 14 und 24 |
| 38 | Kupplung von 5 auf 20 |
| 39 | Bremse an 20 |
| 40 | Kupplung zwischen 14 und 41 |
| 41 | Stegwelle von 42 |
| 42 | erste Planetenstufe |
| 42A | Sonnenrad von 42 |
| 43 | Sonnenrad von 44 |
| 44 | zweite Planetenstufe |
| 45 | Kupplung zwischen 21 und 41 |
| 46 | Planetenräder von 42 |
| 47 | äußeres Zentralrad von 42 |
| 48 | Kupplung zwischen 47 und 49 |
| 49 | Stegwelle von 44 |
| 50 | Hohlrad von 44 |
| 51 | Planetenräder von 44 |
| 52 | Bremse von 44 |
| 53 | reduzierte Planetenradstufe von 3 |
| 53A | Planetenräder |
| 53B | Planetenräder |
| 54 | Sonnenrad von 3 |
| 55 | Zentralrad auf 20 |
| 56 | Kupplung von 5 auf 20 |
| 57 | Bremse an 20 |
| 58 | äußeres Zentralrad von 53 |
| 59 | Bremse von 53 |
| 60 | Gruppengetriebe |
| 61 | Planetenstufe von 60 |
| 62 | Planetenräder von 61 |
| 63 | Sonnenrad von 61 |
| 64 | Stegwelle von 61 |
| 65 | Kupplung zwischen 27 und 24 |
| 66 | Hohlrad von 61 |
| 67 | Bremse |
| 68 | Koppelgetriebe |
| 69 | este Planetenradstufe von 68 |
| 70 | zweite Planetenradstufe von 68 |
| 72 | Planetenräder von 69 |
| 71 | Steg von 69 |
| 73 | Sonnenrad von 69 |
| 74 | Hohlrad von 69 |
| 75 | inneres Zentralrad von 70 |
| 76 | äußeres Zentralrad von 70 |
| 77 | Planetenträger von 70 |
| 78 | Planetenräder von 70 |
| 79 | Planetenrädersatz von 4 |
| 80 | Steg von 53A, 53B und 79 |
| 81 | Hohlrad |
| 82 | Bremse |

## Patentansprüche

1. Lastschaltgetriebe mit stufenlos einstellbarer Übersetzung, das aus einem von einer Hauptantriebswelle (5) angetriebenen, leistungsverzweigenden Koppelgetriebe (1, 68) und einem diesem zugeordneten, vorzugsweise als hydrostatische Einheit ausgebildeten Stellgetriebe (2) besteht, wobei das Koppelgetriebe (1, 68) Planetensätze und zwei abtriebsseitige Koppelwellen (10 und 11) aufweist, deren Drehzahlen an einer Stellbereichsgrenze des Stellgetriebes (2) gleich sind, während bei einer Verstellung des Stellgetriebes (2) in

EP 0 397 804 B1

Richtung der anderen Stellbereichsgrenze die Drehzahl der einen Koppelwelle (11) stetig zunimmt und die der anderen Koppelwelle (10) stetig abnimmt, wobei die Koppelwellen (10 und 11) wechselweise an das Schaltgetriebe (4) kuppelbar sind, wobei die Koppelwellen (10 und 11) über Kupplungen (12 und 13) verbindbar sind mit einer Eingangswelle (14) eines Überlagerungsgetriebes (3), in welchem der Drehzahl der Eingangswelle (14) eine in konstantem oder stufenweise änderbarem Verhältnis zur Hauptantriebswellendrehzahl stehende Drehzahl überlagerbar ist, wobei eine Koppelwelle (21) des Überlagerungsgetriebes (3) unmittelbar mit einer Hauptabtriebswelle (24) des Lastschaltgetriebes kuppelbar ist, dadurch **gekennzeichnet,** daß das Koppelgetriebe (1) eine Doppelplanetenstufe (9) aufweist, von welcher erste Planetenräder (9A) über ein Sonnenrad (16) mit einer Ausgangswelle (15) des Stellgetriebes (2) und über ein Hohlrad (17) mit der ersten Koppelwelle (10) trieblich verbunden sind, während zweite Planetenräder (9B) der Doppelplanetenstufe (9) mit einem inneren Zentralrad (18) der zweiten Koppelwelle (11) kämmen, daß der gemeinsame Steg (6) der Doppelplanetenstufe (9) von der Hauptantriebswelle (5) angetrieben wird, daß eine über das Überlagerungsgetriebe (3) hinausragende Verlängerung der Eingangswelle (14) als Antriebswelle eines Schaltgetriebes (4) dient, mittels welcher über Kuppelelemente (31, 33, 37, 38, 40, 45, 48, 52, 57, 59) zumindest eine Planetenradstufe des Schaltgetriebes (4) antreibbar ist und daß die Koppelwelle (21) des Überlagerungsgetriebes (3) mit dem Schaltgetriebe (4) kuppelbar ist.

2. Lastschaltgetriebe mit stufenlos einstellbarer Übersetzung, das aus einem von einer Hauptantriebswelle (5) angetriebenen, leistungsverzweigenden Koppelgetriebe (1, 68) und einem diesem zugeordneten, vorzugsweise als hydrostatische Einheit ausgebildeten Stellgetriebe (2) besteht, wobei das Koppelgetriebe (1, 68) Planetensätze und zwei abtriebsseitige Koppelwellen (10 und 11) aufweist, deren Drehzahlen an einer Stellbereichsgrenze des Stellgetriebes (2) gleich sind, während bei einer Verstellung des Stellgetriebes (2) in Richtung der anderen Stellbereichsgrenze die Drehzahl der einen Koppelwelle (11) stetig zunimmt und die der anderen Koppelwelle (10) stetig abnimmt, wobei die Koppelwellen (10 und 11) wechselweise an das Schaltgetriebe (4) kuppelbar sind, wobei die Koppelwellen (10 und 11) über Kupplungen (12 und 13) verbindbar sind mit einer Eingangswelle (14) eines Überlagerungsgetriebes (3), in welchem der Drehzahl der Eingangswelle (14) eine in konstantem oder stufenweise änderbarem Verhältnis zur Hauptantriebswellendrehzahl stehende Drehzahl überlagerbar ist, wobei eine Koppelwelle (21) des Überlagerungsgetriebes (3) unmittelbar mit einer Hauptabtriebswelle (24) des Lastschaltgetriebes kuppelbar ist, dadurch **gekennzeichnet,** daß das Koppelgetriebe (1) eine Doppelplanetenstufe (9) aufweist, von welcher jeweils ein erster Satz Planetenräder (9A) über ein Hohlrad (17) mit der ersten Koppelwelle (10) und über ein Sonnenrad (18) mit der zweiten Koppelwelle (11) trieblich verbunden ist, während die zweiten Planetenräder (9B) der Doppelplanetenstufe (9) von einem mit der Ausgangswelle (15) des Stellgetriebes (2) verbundenen Sonnenrad (16) und ein Steg (6) von der Hauptantriebswelle (5) angetrieben werden, daß eine über das Überlagerungsgetriebe (3) hinausragende Verlängerung der Eingangswelle (14) als Antriebswelle eines Schaltgetriebes (4) dient, mittels welcher über Kuppelelemente (31, 33, 37, 38, 40, 45, 48, 52, 57, 59) zumindest eine Planetenradstufe des Schaltgetriebes (4) antreibbar ist und daß die Koppelwelle (21) des Überlagerungsgetriebes (3) mit dem Schaltgetriebe (4) kuppelbar ist.

3. Lastschaltgetriebe mit stufenlos einstellbarer Übersetzung, das aus einem von einer Hauptantriebswelle (5) angetriebenen, leistungsverzweigenden Koppelgetriebe (1, 68) und einem diesem zugeordneten, vorzugsweise als hydrostatische Einheit ausgebildeten Stellgetriebe (2) besteht, wobei das Koppelgetriebe (1, 68) Planetensätze und zwei abtriebsseitige Koppelwellen (10 und 11) aufweist, deren Drehzahlen an einer Stellbereichsgrenze des Stellgetriebes (2) gleich sind, während bei einer Verstellung des Stellgetriebes (2) in Richtung der anderen Stellbereichsgrenze die Drehzahl der einen Koppelwelle (11) stetig zunimmt und die der anderen Koppelwelle (10) stetig abnimmt, wobei die Koppelwellen (10 und 11) wechselweise an das Schaltgetriebe (4) kuppelbar sind, wobei die Koppelwellen (10 und 11) über Kupplungen (12 und 13) verbindbar sind mit einer Eingangswelle (14) eines Überlagerungsgetriebes (3), in welchem der Drehzahl der Eingangswelle (14) eine in konstantem oder stufenweise änderbarem Verhältnis zur Hauptantriebswellendrehzahl stehende Drehzahl überlagerbar ist, wobei eine Koppelwelle (21) des Überlagerungsgetriebes (3) unmittelbar mit einer Hauptabtriebswelle (24) des Lastschaltgetriebes kuppelbar ist, dadurch **gekennzeichnet,** daß das Koppelgetriebe (68) zwei Planetenradstufen (69 und 70) aufweist, wobei ein Sonnenrad (73) der ersten Planetenradstufe (69) sowie ein äußeres Zentral (76) der zweiten Planetenradstufe (70) mit einer Ausgangswelle (15) des Stellgetriebes (2) und ein Hohlrad (74) der ersten Planetenradstufe (69) sowie ein inneres Zentralrad (75) der zweiten Planetenradstufe mit der ersten Koppelwelle (10) trieblich verbunden sind, während ein Steg (71) der ersten Planetenradstufe (69) von der Hauptantriebswelle (5) angetrieben wird und ein Planetenträger (77) der zweiten Planetenradstufe (70) mit der zweiten Koppelwelle (11) in Verbindung steht, daß eine über das Überlagerungsgetriebe (3) hinausragende Verlängerung der Eingangswelle (14) als Antriebswelle eines Schaltgetriebes (4) dient, mittels welcher über Kuppelelemente (31, 33, 37, 38, 40, 45, 48, 52, 57, 59) zumindest eine Planetenradstufe des Schaltgetriebes (4) antreibbar ist und daß die Koppelwelle (21) des Überlagerungsgetriebes (3)

9

mit dem Schaltgetriebe (4) kuppelbar ist.

4. Lastschaltgetriebe nach einem der Ansprüche 1 bis 3, dadurch **gekennzeichnet**, daß das Überlagerungsgetriebe (3) eine reduzierte Planetenradstufe (53) aufweist, wobei Planetenräder (53A) der ersten Stufe mit einem Sonnenrad (54) der Eingangswelle (14) im Eingriff stehen, Planetenräder (53B) der zweiten Stufe mit einem Zentralrad (55) kämmen, das mittels einer Kupplung (56) an die Hauptantriebswelle (5) kuppelbar ist, wobei ein Steg der reduzierten Planetenradstufe (53) als Koppelwelle (21) dient.

5. Lastschaltgetriebe nach Anspruch 4, dadurch **gekennzeichnet**, daß die reduzierte Planetenradstufe (53) Doppelplaneten aufweist und das Zentralrad (55) als Sonnenrad ausgebildet ist.

6. Lastschaltgetriebe nach Anspruch 5, dadurch **gekennzeichnet**, daß die reduzierte Planetenradstufe (53) einen weiteren Planetenrädersatz (79) aufweist, der mit den Doppelplaneten (Planetenräder 53B) und einem weiteren über eine Bremse (82) festlegbaren Hohlrad (81) kämmt.

7. Lastschaltgetriebe nach Anspruch 4, dadurch **gekennzeichnet**, daß die reduzierte Planetenradstufe (53) miteinander kämmende Planeten aufweist und das Zentralrad (55) als Hohlrad ausgebildet ist.

8. Lastschaltgetriebe nach Anspruch 4, dadurch **gekennzeichnet**, daß das mit den Planetenrädern (53B) der zweiten Stufe im Eingriff befindliche Zentralrad (55) mittels einer Bremse (57) gehäusefest abbremsbar ist.

9. Lastschaltgetriebe nach Anspruch 4, dadurch **gekennzeichnet**, daß die Planetenräder (53A) der ersten Stufe mit einem äußeren Zentralrad (58) kämmen, das mittels einer Bremse (59) abbremsbar ist.

10. Lastschaltgetriebe nach einem der Ansprüche 1 bis 3, dadurch **gekennzeichnet**, daß das Schaltgetriebe (4) eine dritte Planetenradstufe (25) aufweist, zu der ein Sonnenrad (29) gehört, das mit der Eingangswelle (14) verbunden ist, wobei der Steg (27) dieser Planetenradstufe (25) mit der Hauptabtriebswelle (24) verbunden und wahlweise über die Kupplung (23) an die Koppelwelle (21) kuppelbar ist oder dessen Hohlrad (30) über eine Bremse (31) gehäusefest abbremsbar ist.

11. Lastschaltgetriebe nach Anspruch 10, dadurch **gekennzeichnet**, daß das Schaltgetriebe (4) eine vierte Planetenradstufe (26) aufweist, zu der ein Sonnenrad (32) gehört, das mit dem Hohlrad (30) der ersten Planetenradstufe (25) verbunden ist, zu dem weiterhin ein Planetenträger (36) gehört, der mit der Hauptabtriebswelle (24) verbunden ist und zu dem ein Hohlrad (34) gehört, das über eine Bremse (33) festlegbar ist.

12. Lastschaltgetriebe nach Anspruch 10, dadurch **gekennzeichnet**, daß die Eingangswelle (14) über eine Kupplung (37) mit der Hauptabtriebswelle (24) verbindbar ist.

13. Lastschaltgetriebe mit einem als dreiwelliges Umlaufrädergetriebe ausgebildeten Überlagerungsgetriebe (3), wobei dessen Sonnenrad (19A) von der Eingangswelle (14) und dessen Steg von der Hauptantriebswelle (5) antreibbar ist, während ein äußeres Zentralrad (22) des Überlagerungsgetriebes (3) mit der Koppelwelle (21) verbunden ist nach einem der Ansprüche 1 bis 3, dadurch **gekennzeichnet**, daß der Steg des Überlagerungsgetriebes (3) wahlweise an die von der Hauptantriebswelle (5) angetriebene Zwischenwelle (20) kuppelbar oder gehäusefest abbremsbar ist.

14. Lastschaltgetriebe nach einem der Ansprüche 1 bis 3, dadurch **gekennzeichnet**, daß das Schaltgetriebe (4) zwei gekoppelte Planetenradstufen (42 und 44) aufweist, wobei eine Stegwelle (41) der ersten Planetenradstufe (42) wahlweise an die Koppelwelle (21) des Überlagerungsgetriebes (3) oder an die Eingangswelle (14) kuppelbar ist und ein Sonnenrad (43) der zweiten Planetenradstufe (44) aufnimmt, während eine Stegwelle (49) der zweiten Planetenradstufe (44) an ein äußeres Zentralrad (47) der ersten Planetenradstufe (42) kuppelbar und unmittelbar mit der Hauptabtriebswelle (24) verbunden ist und wobei Planetenräder (46) der ersten Planetenradstufe (42) mit einem auf der Eingangswelle (14) befestigten Sonnenrad (42A) kämmen und ein Hohlrad (50) abbremsbar ist.

15. Lastschaltgetriebe nach einem der Ansprüche 1 bis 3 oder 10, dadurch **gekennzeichnet**, daß dem Schaltgetriebe (4) ein Gruppengetriebe (60) nachgeschaltet ist, von dessen Planetenstufe (61) eine Stegwelle (64) mit der Hauptabtriebewelle (24) verbunden sowie an den Steg (27) der Planetenradstufe (25) des Schaltgetriebes (4) kuppelbar ist und ein Hohlrad (66) abbremsbar ist.

## Claims

1. Change-under-load transmission with an infinitely variable ratio, which consists of a power-branching coupling mechanism (1, 68) driven by a main drive shaft (5) and of a control mechanism (2) associated therewith and preferably formed as a hydrostatic unit, wherein the coupling mechanism (1, 68) has planet gear sets and two output-side coupling shafts (10 and 11), whose revolution counts at a control range limit of the control mechanism (2) are equal, whereas in the case of displacement of the control mechanism (2) in the direction of the other control range limit the revolution count of one coupling shaft (11) steadily increases and that of the other coupling shaft (10) steadily decreases, wherein the coupling shafts (10 and 11) are capable of being coupled alternately to the change transmission (4), wherein the coupling shafts (10 and 11) can be connected via clutches (12 and 13) to an input shaft (14) of a superposition mechanism (3), in which the revolution count of the input shaft (14) can be superimposed by a revolution count which has a constant or gradually variable ratio to the main drive shaft revolution count, wherein a coupling shaft (21) of the superposition mechanism (3) can be coupled directly to a main drive shaft (24) of the change-under-load transmission, characterised in that the coupling mechanism (1) has a double planet stage (9), of which first planet gears (9A) are drivingly connected via a sun gear (16) to an output shaft (15) of the control mechanism (2) and via a ring gear (17) to the first coupling shaft (10), whereas second planet gears (9B) of the double planet stage (9) mesh with an inner central gear (18) of the second coupling shaft (11), in that the common web (6) of the double planet stage (9) is driven by the main drive shaft (5), in that an extension of the input shaft (14) projecting beyond the superposition mechanism (3) acts as the drive shaft of a change transmission (4), by means of which via coupling elements (31, 33, 37, 38, 40, 45, 48, 52, 57, 59) at least one planet gear stage of the change transmission (4) is drivable and in that the coupling shaft (21) of the superposition mechanism (3) can be coupled to the change transmission (4).

2. Change-under-load transmission with an infinitely variable ratio, which consists of a power-branching coupling mechanism (1, 68) driven by a main drive shaft (5) and of a control mechanism (2) associated therewith and preferably formed as a hydrostatic unit, wherein the coupling mechanism (1, 68) has planet gear sets and two output-side coupling shafts (10 and 11), whose revolution counts at a control range limit of the control mechanism (2) are equal, whereas in the case of displacement of the control mechanism (2) in the direction of the other control range limit the revolution count of one coupling shaft (11) steadily increases and that of the other coupling shaft (10) steadily decreases, wherein the coupling shafts (10 and 11) are capable of being coupled alternately to the change transmission (4), wherein the coupling shafts (10 and 11) can be connected via clutches (12 and 13) to an input shaft (14) of a superposition mechanism (3), in which the revolution count of the input shaft (14) can be superimposed by a revolution count which has a constant or gradually variable ratio to the main drive shaft revolution count, wherein a coupling shaft (21) of the superposition mechanism (3) can be coupled directly to a main drive shaft (24) of the change-under-load transmission, characterised in that the coupling mechanism (1) has a double Planet stage (9), of which in each case a first set of planet gears (9A) is drivingly connected via a ring gear (17) to the first coupling shaft (10) and via a sun gear (18) to the second coupling shaft (11), whereas the second planet gears (94) of the double planet stage (9) are driven by a sun gear (16) connected to the output shaft (15) of the control mechanism (2) and a web (6) is driven-by the main drive shaft (5), in that an extension of the input shaft (14) projecting beyond the superposition mechanism (3) acts as the drive shaft of a change transmission (4), by means of which via coupling elements (31, 33, 37, 34, 40, 45, 48, 52, 57, 59) at least one planet gear stage of the change transmission (4) is drivable and in that the coupling shaft (21) of the superposition mechanism (3) can be coupled to the change transmission (4).

3. Change-under-load transmission with an infinitely variable ratio, which consists of a power-branching coupling mechanism (1, 68) driven by a main drive shaft (5) and of a control mechanism (2) associated therewith and preferably formed as a hydrostatic unit, wherein the coupling mechanism (1, 68) has planet gear sets and two output-side coupling shafts (10 and 11), whose revolution counts at a control range limit of the control mechanism (2) are equal, whereas in the case of displacement of the control mechanism (2) in the direction of the other control range limit the revolution count of one coupling shaft (11) steadily increases and that of :he other coupling shaft (10) steadily decreases, wherein the coupling shafts (10 and 11) are capable of being coupled alternately to the change transmission (4), wherein the coupling shafts (10 and 11) can be connected via clutches (12 and 13) to an input shaft (14) of a superposition mechanism (3), in which the revolution count of the input shaft (14) can be superimposed by a revolution count which has a constant or gradually variable ratio to the main drive shaft revolution count, wherein a coupling shaft (21) of the superposition mechanism (3) can be coupled directly to a main drive shaft (24) of the change-under-load transmission, characterised in that the coupling mechanism (68) has two planet gear stages (69 and 70), wherein a sun gear (73) of the first planet gear stage (69) and an outer central (76) of the second planet gear stage (70) are drivingly connected to an output shaft (15) of the control mechanism (2), and a ring gear (74) of the first planet gear stage (69) and an inner central gear (75) of the second planet gear stage are drivingly connected to the first coupling shaft (10), whereas a web (71) of the first planet gear stage (69) is driven by the main drive shaft (5) and a planet carrier (77) of the second planet gear stage (70) is connected to the second coupling shaft (11), in that an extension of the input shaft 114) projecting beyond the superposition mechanism (3) acts as the drive shaft of a change transmission (4), by means of which via coupling elements (31, 33, 37, 38, 40, 45, 48, 52, 57, 59) at least one planet gear stage of the change transmission (4) is drivable and in that the coupling shaft (21) of the superposition mechanism (3) can be coupled to the change transmission (4).

4. Change-under-load transmission according to one of claims 1 to 3, characterised in that the superposition mechanism (3) has a reduced planet gear stage (53), wherein planet gears (53A) of the first stage mesh with a sun gear (54) of the input shaft (14), planet gears (53B) of the second stage mesh with a central gear (55), which can be coupled by means of a clutch (56) to the main drive shaft (5), and wherein a web of the reduced planet gear stage (53) acts as a coupling shaft (21).

5. Change-under-load transmission according to claim 4, characterised in that the reduced planet gear stage (53) has double planets and the central gear (55) is formed as a sun gear.

6. Charge-under-load transmission according to claim 5, characterised in that the reduced planet gear stage (53) has a further planet gear set (79), which meshes with the double planets (planet gears 53B) and with a further ring gear (81) fixable by a brake (82).

7. Change-under-load transmission according to claim 4, characterised in that the reduced planet gear stage (53) has mutually meshing planets and the central gear (55) is formed as a ring gear.

8. Change-under-load transmission according to claim 4, characterised in that the central gear (55) engaged with the planet gears (53B) of the second stage can be braked firmly with the housing by means of a brake (57).

9. Change-under-load transmission according to claim 4, characterised in that the planet gears (53A) of the first stage mesh with an outer central gear (58), which can be braked by means of a brake (59).

10. Change-under-load transmission according to one of claims 1 to 3, characterised in that the change transmission (4) has a third planet gear stage (25), to which a sun gear (29) belongs, which is connected to the input shaft (14), wherein the web (27) of this planet gear stage (25) can be connected to the main drive shaft (24) and alternately coupled via the clutch (23) to the coupling shaft (21) or its ring gear (30) can be braked firmly with the housing via a brake (31).

11. Change-under-load transmission according to claim 10, characterised in that the change transmission (4) has a fourth planet gear stage (26), to which a sun gear (32) belongs, which is connected to the ring gear (30) of the first planet gear stage (25), to which furthermore a planet carrier (36) belongs, which is connected to the main drive shaft (24) and to which a ring gear (34) belongs, which is fixable via a braked (33).

12. Change-under-load transmission according to claim 10, characterised in that the input shaft (14) is connectable to the main drive shaft (24) via a clutch (37).

13. Change-under-load transmission with a superposition mechanism (3) formed as a three-shaft epicyclic gear system, wherein its sun gear (19A) is drivable by the input shaft (14) and its web is drivable by the main drive shaft (5), whereas an outer central gear (22) of the superposition mechanism (3) is connected to the coupling shaft (21) according to one of claims 1 to 3, characterised in that the web of the superposition mechanism (3) can optionally be coupled or braked firmly with the housing by the intermediate shaft (20) driven by the main drive shaft (5).

14. Change-under-load transmission according to one of claims 1 to 3, characterised in that the change transmission (4) has two coupled planet gear stages (42 and 44), wherein a web shaft (41) of the first planet gear stage (42) can optionally be coupled to the coupling shaft (21) of the superposition mechanism (3) or to the input shaft (14) and receives a sun gear (43) of the second planet gear stage (44), whereas a web shaft (49) of the second planet gear stage (44) can be coupled to an outer central gear (47) of the first planet gear stage (42) and is connected directly to the main drive shaft (24), and wherein planet gears (46) of the first planet gear stage (42) mesh with a sun gear (42A) fixed to the input shaft (14) and a ring gear (50) can be braked.

15. Change-under-load transmission according to one of claims 1 to 3 or 10, characterised in that a group gear (60), by whose planet stage (61) a web shaft (64) is connected to the main drive shaft (24) and can be coupled to the web (27) of the planet gear stage (25) of the change transmission (4) and a ring gear (66) can be braked, is connected in series to the change transmission (4).

## Revendications

1. Boîte de vitesses commutable en charge à rapport variable en continu, comportant une boîte de couplage (1, 68) entraînée par un arbre moteur principal (5) et assurant une bifurcation de la puissance, et une transmission variable (2), précédant la boîte de couplage et formée de préférence par une unité hydrostatique, la boîte de couplage (1, 68) comportant des trains planétaires et deux arbres de couplage (10 et 11) en sortie, dont les vitesses de rotation sont égales à une limite du domaine de variation de la transmission variable (2), tandis qu'en cas de variation de la transmission variable (2) en direction de l'autre limite du domaine, la vitesse de l'un (11) des arbres de couplage augmente en continu et celle de l'autre arbre de couplage (10) diminue en continu, les arbres de couplage (10 et 11) étant couplés alternativement à la boîte de vitesses commutable, les arbres de couplage (10 et 11) pouvant être raccordés par des embrayages (12 et 13) à un arbre d'entrée (14) d'un engrenage différentiel (3) dans lequel une vitesse de rotation présentant un rapport constant ou graduellement variable avec la vitesse de l'arbre moteur principal peut être superposée à la vitesse de rotation de l'arbre d'entrée (14), un arbre de couplage (21) de l'engrenage différentiel (3) pouvant être couplé directement à un arbre principal de sortie (24), **caractérisée** en ce que la boîte de couplage (1) comporte un train planétaire double (9) dont des premiers pignons satellites (9A) sont en liaison motrice avec un arbre de sortie (15) de la transmission variable (2) au moyen d'un pignon planétaire (16) et avec le premier arbre de couplage (10) au moyen d'une couronne a denture intérieure (17), tandis que des seconds pignons satellites (9B) du train planétaire double (9) s'engrènent sur un pignon planétaire intérieur (18) du second arbre de couplage (11), en ce que le porte-satellites commun (6) du train planétaire double (9) est entraîné par l'arbre moteur principal (5), en ce qu'un prolongement de l'arbre d'entrée (14) au-delà de l'engrenage différentiel (3) sert d'arbre primaire d'une boîte de vitesses commutable (4) et peut entraîner, par des éléments d'accouplement (31, 33, 37, 38, 40, 45, 48, 52, 57, 59), au moins un train planétaire de la boîte commutable (4, et en ce que l'arbre de couplage (21) de l'engrenage différentiel (3) peut être couplé à la boîte commutable (4).

2. Boîte de vitesses commutable en charge à rapport variable en continu, comportant une boîte de couplage (1, 68) entraînée par un arbre moteur principal (5) et assurant une bifurcation de la puissance, et une transmission variable (2), précédant la boîte de couplage et formée de préférence par une unité hydrostatique, la boîte de couplage (1, 68) comportant des trains planétaires et deux arbres de couplage (10 et 11) en sortie, dont les vitesses de rotation sont égales à une limite du domaine de variation de la transmission variable (2), tandis qu'en cas de variation de la transmission variable (2) en direction de l'autre limite du domaine, la vitesse de l'un (11) des arbres de couplage augmente en continu et celle de l'autre arbre de couplage (10) diminue en continu, les arbres de couplage (10 et 11) étant couplés alternativement à la boîte de vitesses commutable, les arbres de couplage (10 et 11) pouvant être raccordés par des embrayages (12 et 13) à un arbre d'entrée (14) d'un engrenage différentiel (3) dans lequel une vitesse de rotation présentant un rapport constant ou graduellement variable avec la vitesse de l'arbre moteur principal peut être superposée à la vitesse de rotation de l'arbre d'entrée (14), un arbre de couplage (21) de l'engrenage différentiel (3) pouvant être couplé directement à un arbre principal de sortie (24), **caractérisée** en ce que la boîte de couplage (1) comporte un train planétaire double (9) dont un premier jeu de pignons satellites (9A) est en liaison motrice avec le premier arbre de couplage (10) au moyen d'une couronne à denture intérieure (17) et avec le second arbre de couplage (11) au moyen d'un pignon planétaire (18), tandis que les seconds pignons satellites (9B) du train planétaire double (9) sont entraînés par un pignon planétaire (16) raccordé à l'arbre de sortie (15) de la transmission variable (2) et qu'un porte-satellites (6) est entraîné par l'arbre moteur principal (5), en ce qu'un prolongement de l'arbre d'entrée (14) au-delà de l'engrenage différentiel (3) sert d'arbre primaire d'une boîte de vitesses commutable (4) et peut entraîner, par des éléments d'accouplement (31, 33, 37, 38, 40, 45, 48, 52, 57, 59), au moins un train planétaire de la boîte commutable (4), et en ce que l'arbre de couplage (21) de l'engrenage différentiel (3) peut être couplé à la boîte commutable (4).

3. Boîte de vitesses commutable en charge à rapport variable en continu, comportant une boîte de couplage (1, 68) entraînée par un arbre moteur principal (5) et assurant une bifurcation de la puissance, et une transmission variable (2), précédant la boîte de couplage et formée de préférence par une unité hydrostatique, la boîte de couplage (1, 68) comportant des trains planétaires et deux arbres de couplage (10 et 11) en sortie, dont les vitesses de rotation sont égales à une limite du domaine de variation de la transmission variable (2), tandis qu'en cas de variation de la transmission variable (2) en direction de l'autre limite du domaine, la vitesse de l'un (11) des arbres de couplage augmente en continu et celle de l'autre arbre de couplage (10) diminue en continu, les arbres de couplage (10 et 11) étant couplés alternativement à la boîte de vitesses commutable, les arbres de couplage (10 et 11) pouvant être raccordés par des embrayages (12 et 13) à un arbre d'entrée (14) d'un engrenage différentiel (3) dans lequel une vitesse de rotation présentant un rapport constant ou graduellement variable avec la vitesse de l'arbre moteur principal peut être superposée à la vitesse de rotation de l'arbre d'entrée (14), un arbre de couplage (21) de l'engrenage différentiel (3) pouvant être couplé directement à un arbre principal de sortie (24), **caractérisée** en ce que la boîte de couplage (68) comporte deux trains planétaires (69 et 70) où un pignon planétaire (73) du premier train planétaire (69) et une roue planétaire extérieure (76) du second train planétaire (70) sont en liaison motrice avec un arbre de sortie (15) de la transmission variable (2), et où une couronne à denture intérieure (74) du premier train planétaire (70) et une roue planétaire intérieure (75) du second train planétaire sont en liaison motrice avec le premier arbre de couplage (10), tandis qu'un porte-satellites (71) du premier train planétaire (69) est entraîné par l'arbre moteur principal (5) et qu'un porte-satellites (77) du second train planétaire (70) est raccordé au second arbre de couplage (11), en ce qu'un prolongement de l'arbre d'entrée (14) au-delà de l'engrenage différentiel (3) sert d'arbre primaire d'une boîte de vitesses commutable (4) et peut entraîner, par des éléments d'accouplement (31, 33, 37, 38, 40, 45, 48, 52, 57, 59), au moins un train planétaire de la boîte commutable (4), et en ce que l'arbre de couplage (21) de l'engrenage différentiel (3) peut être couplé à la boîte commutable (4).

4. Boîte de vitesses selon l'une des revendications 1 à 3, **caractérisée** en ce que l'engrenage différentiel (3) comporte un train planétaire réducteur à deux étages (53) dont des pignons satellites (53A) du premier étage s'engrènent sur un pignon planétaire (54) de l'arbre d'entrée (14) et dont des pignons satellites (53B) du second étage s'engrènent sur une roue planétaire (55) qui peut être couplée à l'arbre moteur principal 15) au moyen d'un embrayage (56), et/ou un porte-satellites du train planétaire réducteur (53) sert d'arbre de couplage (21).

5. Boîte de vitesses selon la revendication 4, **caractérisée** en ce que le train planétaire réducteur (53) comporte des satellites doubles et en ce que ladite roue planétaire (55) est un pignon central.

6. Boîte de vitesses selon la revendication 5, **caractérisée** en ce que le train planétaire réducteur (53) comporte un autre jeu de pignons satellites (79) qui s'engrènent sur les satellites doubles (pignons satellites 53B) et sur une autre couronne à denture intérieure (81) qui peut être bloquée au moyen d'un frein (82).

7. Boîte de vitesses selon la revendication 4, **caractérisée** en ce que le train planétaire réducteur (53) comporte des satellites s'engrenant les uns dans les autres et en ce que la roue planétaire (55) est formée par une couronne à denture intérieure.

8. Boîte de vitesses selon la revendication 4, **caractérisée** en ce que la roue planétaire (55) qui s'engrène sur les pignons satellites (53B) du second étage peut être bloquée par rapport à un carter au moyen d'un frein (57).

9. Boîte de vitesse selon la revendication 4, **caractérisée** en ce que les pignons satellites (53A) du premier étage s'engrènent sur une roue planétaire extérieure (58) qui peut être freinée au moyen d'un frein (59).

10. Boîte de vitesses selon l'un des revendications 1 à 3, **caractérisée** en ce que la boîte commutable (4) comporte un troisième train planétaire (25) auquel appartient un pignon planétaire (29) raccordé à l'arbre d'entrée (14) et dans lequel le porte-satellites (27) de ce train planétaire (25) est raccordé à l'arbre principal de sortie (24) et peut être couplé sélectivement à l'arbre de couplage (21) au moyen de l'embrayage (23), ou la couronne (30) de ce train planétaire peut être bloquée par rapport à un carter au moyen d'un frein (31).

11. Boîte de vitesses selon la revendication 10, **caractérisée** en ce que la boîte à commutation (4) comporte un quatrième train planétaire (26) auquel appartient un pignon planétaire (32), raccordé à la couronne (30) du premier train planétaire (25), à laquelle appartient en outre un porte-satellites (36) raccordé à l'arbre principal de sortie (24), et à laquelle appartient une couronne à denture intérieure (34) qui peut être bloquée au moyen d'un frein (33).

12. Boîte de vitesses selon la revendication 10, **caractérisée** en ce que l'arbre d'entrée (14) peut être raccordé à l'arbre principal de sortie (24) au moyen d'un embrayage (37).

13. Boîte de vitesses comportant un engrenage différentiel (3) sous la forme d'un engrenage planétaire à trois arbres, dont le pignon planétaire (19A) peut être entraîné par l'arbre d'entrée (14) et dont le porte-satellites peut être entraîné par l'arbre moteur principal (5), tandis qu'une roue planétaire extérieure (22) de l'engrenage différentiel (3) est raccordée à l'arbre de couplage (21), selon l'une des revendications 1 à 3, **caractérisée** en ce que le porte-satellites de l'engrenage différentiel (3) peut être sélectivement couplé à l'arbre intermédiaire (20) entraîné par l'arbre moteur principal (5), ou bloqué par rapport à un carter.

14. Boîte de vitesses selon l'une des revendications 1 à 3, **caractérisée** en ce que la boîte à commutation (4) comporte deux trains planétaires couplés (42 et 44) et dans laquelle un arbre porte-satellites (41) du premier train planétaire (42) peut être couplé sélectivement à l'arbre de couplage (21) de l'engrenage différentiel (8) ou à l'arbre d'entrée (14) et porte un pignon planétaire (48) du second train planétaire (44), tandis qu'un arbre porte-satellites (49) du second train planétaire (44) peut être couplé à une roue planétaire extérieure (47) du premier train planétaire (42) et est raccordé directement à l'arbre principal de sortie (24), et dans laquelle des pignons satellites (46) du premier train planétaire (42) sont engrenés sur un pignon planétaire (42A) fixé à l'arbre d'entrée (14), et dans laquelle une couronne à denture intérieure (50) peut être freinée.

15. Boîte de vitesses selon l'une des revendications 1 à 3 ou 10, **caractérisée** en ce que la boîte à commutation (4) est suivie d'un groupe-relais (60) pourvu d'un train planétaire (61) dont un arbre porte-satellites (64) est raccordé à l'arbre principal de sortie (24) et peut être couplé au porte-satellites (27) du train planétaire (25) de la boîte à commutation (4) et dont une couronne à denture intérieure (66) peut être freinée.

FIG.1

FIG.2

| Sch.El. GANG | 13 | 12 | 23 | 37 | 31 | 33 |
|---|---|---|---|---|---|---|
| R 2 | | ● | | | | ● |
| R 1 | ● | | | | | ● |
| 0 | | | | | ● | ● |
| V1A | ● | | | | ● | |
| V 2 | | ● | | | ● | |
| V3 | | ● | ● | | | |
| V4L | ● | | ● | | | |
| V4S | | ● | | | ● | |
| V1B | ● | | | ● | | |

FIG. 3

-20    0    20    40    60    80    100

V →

# FIG.4

# FIG.5

| Sch.EL GANG | 13 | 12 | 23 | 31 | 33 |
|---|---|---|---|---|---|
| R2 | | ● | | | ● |
| R1 | ● | | | | ● |
| 0 | | | | ● | ● |
| V1A | ● | | | ● | |
| V2 | | ● | | ● | |
| V3 | | ● | ● | | |
| V4L | ● | | ● | | |

FIG.6

FIG.7

| Sch.E.L. GANG | 13 | 12 | 38 | 31 | 39 |
|---|---|---|---|---|---|
| R2 | | ● | | | ● |
| R1 | ● | | | | ● |
| 0 | | | | ● | ● |
| V1A | ● | | | ● | |
| V2 | | ● | | ● | |
| V3 | | ● | ● | | |
| V4L | ● | | ● | | |

## FIG.8

## FIG.9

| Sch.El. GANG | 13 | 12 | 52 | 48 | 40 | 45 | 23 |
|---|---|---|---|---|---|---|---|
| R 1 | ● | | ● | ● | | | |
| 0 | | | ● | ● | ● | | |
| V21 | ● | | ● | ● | | | |
| V41 | ● | | ● | | ● | | |
| V61 | ● | | | ● | ● | | |
| V2 | | ● | ● | ● | | | |
| V3 | | ● | ● | | | ● | |
| V4 | | ● | ● | | ● | | |
| V4L | ● | | ● | | | ● | |
| V5 | | ● | | | ○ | | ● |
| V6 | | ● | | ● | ● | | |
| V6L | ● | | | | ○ | | ● |

## FIG.10

## FIG.12

| Sch.El. GANG | 13 | 12 | 56 | 59 | 57 |
|---|---|---|---|---|---|
| R2 |  | ● |  |  | ● |
| R1 | ● |  |  |  | ● |
| 0 |  |  |  | ● | ● |
| V1A | ● |  |  | ● |  |
| V2 |  | ● |  | ● |  |
| V3 |  | ● | ● |  |  |
| V4 L | ● |  | ● |  |  |

FIG. 11

FIG.13

FIG.14

| Sch.EL GANG | 13 | 12 | 38 | 31 | 39 | 65 | 67 |
|---|---|---|---|---|---|---|---|
| R2 | | ● | | | ● | | |
| R1 | ● | | | | ● | | |
| 0 | | | | ● | ● | | |
| V1A | ● | | | ● | | | |
| V2 | | ● | | ● | | | |
| V3 | | ● | ● | | | | |
| V4L | ● | | ● | | | | |
| G1 | | | | | | ● | |
| G2 | | | | | | | ● |

FI G. 15

FIG.16

| Sch.El. GANG | 13 | 12 | 56 | 59 | 82 |
|---|---|---|---|---|---|
| R2 | | ● | | | ● |
| R1 | ● | | | | ● |
| | | | | | |
| V1 | ● | | | ● | |
| V2 | | ● | | ● | |
| V3 | | ● | ● | | |
| V4 | ● | | ● | | |